# EUROPEAN PATENT APPLICATION

(11) **EP 3 984 878 A1**
(43) Date of publication of application: **20.04.2022**
(21) Application number: 20202615.9
(22) Date of filing: 19.10.2020
(51) Int. Cl.: B63B 39/04, B63B 39/14, B63C 9/28

(54) **A SYSTEM FOR MAINTAINING A PREDETERMINED ROLL ANGLE OF A MARINE VESSEL**

(71) Applicant: Dacoma ApS, 5700 Svendborg (DK)
(72) Inventor: Baurichter, Arnd Friedrich, 5700 Svendborg (DK)
(74) Representative: Dragsted Partners A/S

(57) **Abstract**

A system for maintaining a predetermined roll angle of a hull of a marine vessel, the system comprising: a stabilisation element arranged below the waterline on an outer surface of the hull, a sensor unit providing a first sensor data providing information relating to the movement and/or positioning of the marine vessel, a processing unit receiving the first sensor data and providing a first control output, a control unit receiving the first control output and providing a first control input to the stabilisation element to counteract a rolling movement and/or positioning of the marine vessel.

## Description

### Technical field

A system for maintaining a predetermined roll angle (heel) of a hull of a marine vessel, the system comprising: a stabilisation element arranged below the waterline on an outer surface of the hull and a sensor unit providing a first sensor data providing information relating to the movement and/or positioning of the marine vessel.

### Background

Marine vessels are generally vessels that may be configured to carry a plurality of crew members aboard the vessel, where the vessel is often operated and controlled by crew members. Some marine vessels are open vessels where the main part of the vessel is the hull of the vessel, where the vessel may have an open or a closed helm, and where the deck may be open for crew members and/or passengers.

A marine vessel, such as a boat, has a draft which is the distance between the waterline and the keel of the boat, and a freeboard which is the distance between the waterline and the upper edge of the side of the boat (gunwale). One of the risks that are always present when a marine vessel is in the water is where a passenger or a crew member may fall overboard, which is one of the reasons that crew members and passengers on boats are required to wear lifejackets or life vests to ensure that the person will float safely when in the water. When a person falls overboard, the remaining persons on the marine vessel will attempt to bring the person back aboard the vessel, by e.g. throwing a rescue net, a ladder or a platform out to the person to assist the recovery of the person from the body of water and pull them over the freeboard and back onto the deck of the boat.

However, in situations where such rescue remedies are not present, it may be necessary to lift, pull or carry the person over the freeboard and/or a railing to rescue the person and bring the person back into the boat. Such a situation may also occur where e.g. a crew member and/or a passenger on the vessel decides to willingly leave the vessel to go for a swim or a dive, or similar activities. The energy required to bring a person back onto a marine vessel from the water may be relatively high, and e.g. a rescue of a person that has been in cold water for some time may mean that the person in the water may not be capable of assisting in getting back on board and over the freeboard of the vessel. Furthermore, if there is only one person left behind on the marine vessel, it may be difficult for one person to pull a person from the water and above the freeboard of the boat.

Thus, there may be situations where it may be advantageous to minimise the energy required to bring a person and/or any other item from the surface of the water and onto the deck of the marine vessel.

### Description

In accordance with the present disclosure a system for maintaining a predetermined roll angle of a hull of a marine vessel is provided, the system comprising:
a stabilisation element arranged below the waterline on an outer surface of the hull, a sensor unit providing a first sensor data providing information relating to the movement and/or positioning of the marine vessel, a processing unit receiving the first sensor data and providing a first control output, a control unit receiving the first control output and providing a first control input to the stabilisation element to counteract a rolling movement and/or positioning of the marine vessel.

In accordance with the present disclosure, a roll angle may be understood as a heel of a hull of a marine vessel. I.e. the roll angle of a marine vessel may be understood as the boat tipping to one side or the other, or optionally in extreme situations, the marine vessel may be configured to maintain a predetermined roll angle that may be close to or equal to horizontal.

In accordance with the present disclosure a stabilisation element may be understood as a keel, a hydrodynamic keel, an airkeel, or any kind of element that is capable of stabilising the heel of a marine vessel, especially when the marine vessel is at low speeds. It may be understood that a stabilisation element is not to be understood as a fin, ballast tanks, rolling weights, bilge keels, an internal gyroscope or other internal systems of a marine vessel. The stabilisation element is mainly to be effective at low speeds.

The first sensor data may e.g. be in the form of data received from a gyroscope and/or an accelerometer, where the data provides indications on the current roll angle of a marine vessel, an indication on what forces are affecting the hull of the marine vessel to e.g. roll or heel. The sensor data may be real time senor data, where the sensed data may be provided instantaneously to the processing unit via signal communication parts capable of communicating signal data between two parts of the system via wired and/or wireless communication. The signal communication part may e.g. be a wired electrical communication, a wired optical communication, wireless radiofrequency signals, optical signals or any suitable signal communication pathway.

The disclosed system may be utilised to improve a situation in an open water situation where a person or an item is to be retrieved from a waterline in a body of water, where a marine vessel may be positioned close to the person or the item, and where the marine vessel is at a very low speed, or even where the speed of the marine vessel is close to or equal to zero in a forwards or backwards movement. The system may be activated in order to ensure that the marine vessel maintains a predetermined roll angle in the period where the person or item is retrieved from the water. Thus, by activating the system, the freeboard of the marine vessel, i.e. the distance from the waterline and towards the railing of the marine vessel, the top of the hull and/or bottom of a side hatch, is maintained in a predetermined position to ensure that the person or item may be retrieved at the starboard or port side of the hull. The predetermined position ensures that the rolling motion of the marine vessel is minimised, or possibly eliminated while the system is active, allowing the retrieving to be done without a rolling motion of the hull of the marine vessel.

The minimisation and/or the elimination of the rolling motion of the marine vessel may ensure that a person that is onboard the marine vessel and is e.g. pulling the item or person in a direction towards the deck is protected from increases and/or decreases in distance from the item or person, and may therefore use a constant force. Any rolling motion would cause the hull to roll from side to side, causing the distance between the item or person to lengthen and shorten at a certain wavelength, due to waves in the body of water.

This may be especially helpful when waves in the body of water are above a certain height, where the rolling motion of the marine vessel may e.g. cause the person on the marine vessel to lose grip when the distance from the surface of the water increases. However, by using the stabilisation element arranged below the waterline of the marine vessel, the marine vessel may be utilised to counteract the rolling motion instantly and thereby maintain the position of the railing/upper part of the hull relative to the waterline, which may assist any kind of rescue operation of persons or items from the water.

The system may operate by the use of sensor data, where the sensor data may be capable of providing data that indicates the movement and/or the positioning of the marine vessel. The sensor data may also be capable of measuring a change of movement and/or positioning of the marine vessel, where the influence of the change in movement or position may e.g. be due to windy conditions, currents, tides, waves and other elements that may affect the movement and/or the positioning of a marine vessel.

In one embodiment, the marine vessel may be positioned in a body of water, where the propulsion system is either inactive or may be adapted to hold the position of the marine vessel. The body of water may be between calm or choppy, i.e. having small to medium sized waves, where the waves may be large enough to influence the rolling movement of the marine vessel and/or the hull of the vessel.

The sensors may detect a change in position or movement of the vessel, where the sensor sends a first sensor data representing this movement to a processing unit. The processing unit may receive the first sensor data and process the data in accordance with the type of data and the contents of the data. Upon processing the sensor data, the processing data may send a first control output which contains information on what the processor has computed as a necessary counteraction to the movement or, in a certain situation where no movement is present, may compute the lack of a counteraction.

The first control output may be received by a control unit, where the control unit may e.g. be seen as a control mechanism for the stabilisation element. This may e.g. be a control unit for an electrical motor, where the control unit may be capable of controlling the exact movement of the stabilisation element when in use. The control unit may provide a first control input signal, where the control input signal may be a signal that may control the stabilisation element in a predetermined fashion, by e.g. providing an analogue control input and/or a digital control input to the stabilisation element.

The stabilisation element may receive the first control input (second control output, stabilisation control input) where e.g. the control input may be an input into an electrical motor, where the electrical motor reacts in a predetermined way to the control input. The stabilisation element may be a stabilisation element that is capable of providing a counterforce in a direction of the rolling motion of the marine vessel. As an example, if a marine vessel rolls to the starboard side, the stabilisation element may provide an equal counterforce in the opposite direction (towards the port side). When the counterforce has been applied, and the marine vessel may be inclined to roll towards the port side, the stabilisation element may provide a countermovement in the opposite direction (towards the starboard side). When the system is activated, the stabilisation element may be continuously adjusted in either direction to counteract the force applied to the marine vessel providing a potential rolling motion in order to counteract the rolling motion. This is especially helpful when the marine vessel is provided with no propulsion in a forwards or backwards direction, or when the marine vessel is propelled at very low speeds, as the marine vessel may follow the movement of the waves, wind and/or other factors when there is little or no propulsion.

The stabilisation element may be any kind of stabilisation element capable of affecting the hull of the marine vessel in a rolling movement in the starboard direction and/or the port direction. The stabilisation element may be in the form of a plurality of parts that individually provide a force in one direction but may also be a single element capable of providing a force in at least two directions.

This system may therefore reduce the rolling motion, as the sensors continuously monitor the position and the movement of the marine vessel, and for every time a sensor sends a signal, the processing unit may, based on predefined and/or learned rules, provide control signals to counteract the movement, or if no movement is present, may maintain the positioning of the stabilisation element. If the system overcompensates the movement of the vessel, the sensors may register this overcompensation and respond with a counteracting movement of the stabilisation element for the overcompensation.

Optionally, the processing unit may be provided with a memory device, where the memory device may be provided with algorithms capable of identifying the sensor data and providing a predefined response to the sensor data and/or the contents of the data signal and provide a control signal that is intended to allow the stabilising element to counteract the coming movement of the marine vessel. The algorithms may be algorithms that are specifically adjusted for the specific marine vessel, and/or may also be generic algorithms that are adapted to respond to known movements of a marine vessel.

In one exemplary embodiment, the system may be configured to stabilise the roll of the marine vessel. The stabilisation of the roll of the marine vessel may mean that if a marine vessel rolls between 5 degrees to the starboard and 5 degrees to the port, the system may be configured to reduce and/or eliminate the rolling action of the hull, relative to the surface of the body of water. This may mean that the system counteracts the rolling movement, so that if the hull has a tendency of rolling five degrees, the stabilisation element of the system may provide a counterforce to reduce amount of the roll or to eliminate the amount of roll. This may mean that the roll may be reduced by 50% or more, or may also be substantially eliminated, by reducing the roll by 90% or more.

In one exemplary embodiment, the stabilisation element may be a hydrodynamic keel. The marine vessel may be provided with a hydrodynamic keel where the hydrodynamic keel is intended to glide through the body of water when the marine vessel is propelled in a forwards and/or backwards direction, where the keel may interact with the body of water by creating hydrodynamic lift when the water flows past the surface of the keel. This means that the keel may have a "wing" shape, creating turbulence or reduction in pressure in predefined areas to stabilise the heeling of the marine vessel.

In one exemplary embodiment, the stabilisation element may be a counterweight keel and/or a positive buoyancy keel (floatation body keel), where optionally the hydrodynamic keel may be a counterweight keel and/or a positive buoyancy keel. By providing a counterweight keel or a positive buoyancy keel, where the keels may be adapted to move relative to the outer surface of the hull. Thus, the stabilisation element may be adapted to operate below the waterline of the boat, where the movement of the keel may be used to counteract the rolling movement of the hull. As an example, when a counterweight keel is used, the keel may be moved in a direction opposite to the rolling motion to counteract the rolling motion of the hull. I.e. when the rolling motion is in a starboard direction the counterweight keel may move in a port direction, i.e. in an opposite direction from the movement of the hull. In another example, when a positive buoyancy keel is used, the keel may be moved in the same direction as the rolling movement, in order to provide increased buoyancy in the direction of the rolling movement, so that the increased buoyancy maintains the roll position of the marine vessel and reduces and/or eliminates the roll of the hull.

In one exemplary embodiment, the system may be at least part of an overboard recovery system. An overboard recovery system may be a system where the system may be activated in case a person is in the water and needs to be recovered from the water. The system may be adapted to be activated upon identification of a need for recovery of a person from the water. The activation of the system may ensure that the roll of the hull will be minimised and/or eliminated during the recovery operation, where the reduction of rolling motion will assist a person aboard the boat to recover the person in the water over the railing of the marine vessel. Thus, the reduction in rolling motion will create an optimal work environment for the person aboard the boat, so that the distance from the surface of the water and the railing of the hull is close to being constant during the recovery operation.

In one exemplary embodiment, the stabilisation element may comprise a body that has a pivotal connection to the outside of the hull. The body may be in the form of a flotation device and/or a counterweight, where the pivotal connection may be utilised to move the buoyancy point and/or the centre of gravity of marine vessel when manoeuvred across the pivotal connection. The pivotal connection may be seen as a linkage between the hull and the stabilisation element, where it may be seen that the pivotal connection is positioned close to or on the hull of the marine vessel, and wherein the stabilisation element as a whole may pivot along a pivotal axis that is defined by the pivotal connection.

In one exemplary embodiment, the stabilisation element may be configured to counteract a rolling movement of the hull of the marine vessel in relation to wave movement of the surrounding body of water that interacts with the hull. The stabilisation element may be a stabilisation element that is capable of providing a counterforce in a direction of the rolling motion of the marine vessel. As an example, if a marine vessel rolls to the starboard side, the stabilisation element may provide an equal counterforce in the opposite direction (towards the port side). When the counterforce has been applied, and the marine vessel may be inclined to roll towards the port side, the stabilisation element may provide a countermovement in the opposite direction (towards the starboard side). When the system is activated, the stabilisation element may be continuously adjusted in either direction to counteract the force applied to the marine vessel providing a potential rolling motion, in order to counteract the rolling motion. This is especially helpful when the marine vessel is provided with no propulsion in a forwards or backwards direction, or when the marine vessel is propelled at very low speeds, as the marine vessel may follow the movement of the waves, wind and/or other factors when there is little or no propulsion.

In one exemplary embodiment, the control input controls an angular movement of the stabilisation element. The control unit may provide a control input and may be adapted provide a specific angular position of the stabilisation element as an input to the sensor output and/or the control output of processor. Thus, when a sensor output is received by the processor, and a predefined control output is transmitted to the control unit, the control unit may respond by adjusting an angular position of the stabilisation element and/or to maintain a predefined position of the stabilisation element. This may mean that if a wave hits the hull of the marine vessel, the sensor may register the resulting movement of the hull, and where the processor receives the sensor output and makes computations and/or calculation based on rules and/or algorithms to respond to the sensor output and transmit a control input to the control unit, to adjust the angular position of the stabilisation element to counteract the force applied to the hull by the wave.

In one exemplary embodiment, the angular movement of the stabilisation element may be relative to a vertical axis and/or a longitudinal plane of the marine vessel. This may mean that the angular movement is in relation to the relative angle between a vertical and the tangent of the water in which the marine vessel floats. The tangent of the water may be a straight line or a plane that touches the curved surface of the water at one point, especially when there are waves in the water.

In one exemplary embodiment, the system may further comprise a positioning unit providing a first positioning output which provided as input to the processing unit. The positioning unit may be configured to provide a fixed position relative to the earth surface and/or a fixed position relative to a predefined object. Thus, the positioning unit may provide the system with a position as an input into the system, where the system may be adapted to react to the position by implementing the propulsion system and/or the stabilisation element. Thus, in one example, the position may be relative to the person that has fallen overboard in order to ensure that the marine vessel maintains a certain position relative to the person in need of rescue and to ensure that if the person drifts in a direction away from the marine vessel, the marine vessel may compensate for the difference in position, or alternatively, where the marine vessel is kept in a predefined geographical position while the recovery action is being performed.

In one exemplary embodiment, the system may further comprise a human interface unit receiving a predetermined roll angle from a user, providing a second control input to the processing unit. The human interface unit may be adapted to e.g. activate the system when human input is introduced into the system. The human interface unit may communicate with an activation unit, which activates the components of the system in order to maintain a predetermined roll angle. The human interface unit may also be adapted to provide a selection choice for the person operating the system, where the selection choice may be a predefined roll angle (or heel) of the marine vessel. Thus, if a recovery operation is to be performed at a starboard side of the marine vessel, the human interface unit may provide a selection where the roll angle may be adjusted in the starboard direction, allowing the distance between the water and the railing (gunwale) to be shortened on the starboard side. This allows the railing and/or the upper edge of the deck to be lowered towards a predefined level, allowing the distance a person or an object to be lifted out of the water to be minimised.

In one exemplary embodiment, the system may be an active stabilisation system, and where the system reacts to the movement of the marine vessel. The active stabilisation system may be adapted to counteract the movement of the marine vessel, in order to maintain predefined roll position of the marine vessel.

In one exemplary embodiment, the predetermined roll angle may be utilised to heel the marine vessel so that at least a part of a port side or a starboard side of a deck of the marine vessel may be angled/tilted towards the surface of the water body surrounding the hull of the marine vessel. Thus, the predefined roll angle may make the lifting of a body or an object from the water easier, as there is less distance to travel from the deck and towards the water level. This will also mean that the opposing side (starboard or port) will have a longer distance from the surface of the water and towards the side of the deck, as the stabilisation element has been adapted to tilt the hull a predefined distance/angle.

In one exemplary embodiment, the sensor unit provides continuous sensor data to the processing unit and where the processing unit provides continuous control output to the control unit. This means that the sensor of the system continuously monitors the position and/or the movement of the hull and/or the marine vessel, allowing the processing unit to update continuously on how to react with the sensor input. Thus, the control output and/or the control input may also be continuously refreshed, allowing the control unit to provide an appropriate response to the sensor unit, i.e. by manoeuvring the stabilisation unit or by maintaining the stabilisation unit in its predefined position.

In one exemplary embodiment, the predetermined roll angle may be in a starboard and/or a port direction. The hull of the marine vessel may have a longitudinal axis, where the longitudinal axis may be parallel or coaxial with the roll axle of the hull and/or the marine vessel. Thus, when the predetermined roll angle is decided, the angular movement of the hull and/or the marine vessel may be around the roll axle of the hull in a starboard and/or a port direction. The direction may also be in a positive or negative angular direction, in a clockwise and/or counterclockwise direction, or similarly. Thus, without any influence of the system, the neutral position of the boat may be at 0 degrees, at a horizontal position or a neutral position where the gunwale is equal on both sides of the hull. A roll angle to the starboard and/or port side may be different from a horizontal position, allowing the gunwale of the hull to be higher on one side than on the opposing side.

In one exemplary embodiment, the control unit may comprise an electrical drive unit that may be mechanically connected to the stabilisation element. The electrical drive unit may e.g. be a stepper motor, where the rotation of the motor may be incrementally altered based on a control output from the processing unit. Thus, the precise movement of the stabilisation element may be controlled by the electrical drive unit. Alternatively, the electrical drive unit may be connected to a gearbox or a stabilisation control unit where a specific amount of turn of the electrical drive unit results in an incremental movement of the stabilisation element.

In one exemplary embodiment, the control unit may comprise a hydraulic drive unit that may be mechanically connected to the stabilisation element. The hydraulic drive unit may e.g. be a hydraulic pump or a piston, where the rotation of the pump or movement of the piston may be incrementally altered based on a control output from the processing unit. Thus, the precise movement of the stabilisation element may be controlled by the hydraulic drive unit. Alternatively, the hydraulic drive unit may be connected to a gearbox or a stabilisation control unit where a specific pressure of the hydraulic drive unit results in an incremental movement of the stabilisation element. In one exemplary embodiment, the hull of the marine vessel may comprise a hatch (door) on a port and/or a starboard side of the hull, where lower periphery of the hatch may be closer to the waterline than an upper periphery of the siding of the hull and/or railing of the hull. By providing a hatch on the starboard and/or the port side of the hull, the need to roll the hull of the marine vessel may be reduced. Thus, the recovery operation may be performed from the water and via the hatch, thereby reducing the distance which an object or a body has to be lifted out of the water.

In one exemplary embodiment, the sensor unit may be one or more of the following: gyroscope, accelerometer, GPS, proximity sensor, magnetometer, barometer, roll sensor, pitch sensor, heave sensor, velocity sensor, or any kind of sensors that are capable of registering the motion of the hull of a marine vessel.

In one exemplary embodiment, the predetermined roll angle may be greater than 0 degrees in a starboard and/or a port direction of the hull, preferably wherein the predetermined roll angle may be greater than 1 degree in a starboard and/or a port direction. By having a predefined roll angle that is greater than 0 or 1 degrees in a starboard and/or port direction, it may be possible to provide an offset angle of the hull relative to the water, where the system maintains the predetermined roll angle during wind, current or wave motion of the hull. Thus, if a roll angle is chosen which is at 2 degrees to the starboard side, the system will maintain this position until the system is deactivated.

In accordance with the present disclosure, a method for maintaining a predetermined roll angle of a hull of a marine vessel may be also provided, the method comprising the steps of: providing a first sensor data providing information relating to the movement and/or positioning of the marine vessel, receiving the first sensor data and providing a first control output, receiving the first control output and providing a first control input to a stabilisation element that may be arranged below the waterline on an outer surface of a hull to counteract a movement and/or a positioning of the marine vessel.

In one exemplary embodiment, the marine vessel may be a marine vessel comprising a lifting crane and/or a lifting hoist, where the lifting crane may alter the centre of gravity/buoyancy of the marine vessel during use, where the sensor unit may be configured to provide information relating to the movement of the marine vessel during the use of the lifting crane. When a lifting crane is used for transporting items such as goods, fishing catch or similar to and from the marine vessel, the movement of the mass of the crane and/or the goods may alter the centre of gravity or the centre of buoyancy of the marine vessel. This movement may in normal circumstances cause a rolling movement of the hull in the body of water causing the marine vessel tilt in one or more directions. However, using the present system, the stabilisation element may be utilised to provide a counterbalance of the weight/mass of the crane, thereby allowing the marine vessel to maintain its predetermined roll angle during the lifting movement. The system may continuously monitor the sensor data, so that when the sensor data indicates a shift in balance aboard the marine vessel, the stabilisation element may be moved to counteract the rolling movement of the marine vessel.

### Brief description of the drawings

The following is an explanation of exemplary embodiments with reference to the drawings, in which:
Fig. 1 shows a side view of a floating marine vessel in accordance with the present disclosure,
Fig. 2 shows a front view of a floating marine vessel in accordance with the present disclosure,
Figs. 3A-3B show a front view of a floating marine vessel during a recovery operation in accordance with the present disclosure,
Fig. 4 shows a perspective view of a floating marine vessel during a recovery operation in accordance with the present disclosure, and
Fig. 5 shows a schematic view of a system for maintaining a predetermined roll angle of a hull of a marine vessel in accordance with the present disclosure.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

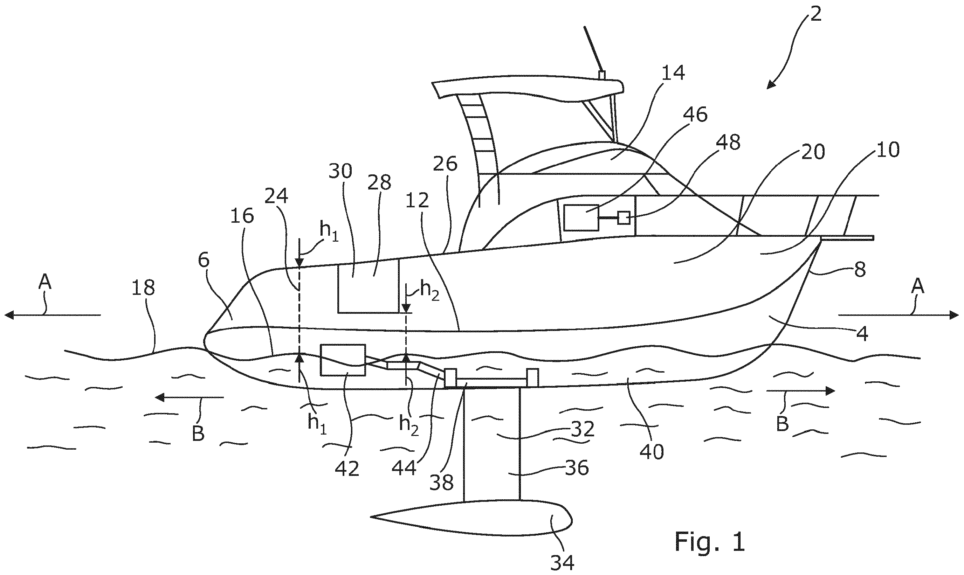

Fig. 1 is a side view of a floating marine vessel 2, or a boat 2, where the marine vessel 2 has a hull 4, having an outer surface 10 as well as a stern part 6 and a bow part 8. The hull has a deck 12, where the deck may have a deckhouse 14 which may comprise the controls for the steering and the propulsion of the marine vessel 2.

The hull has a waterline 16 which represents the surface of the water 18 when the hull is not moving. The hull may have a starboard side 20 and a port side 22 (not shown), as well as a longitudinal axis A. The starboard side 20 has a gunwale 24 that has a height h1 which extends from the waterline 16 and towards the top 26 of the starboard side 20 of the hull 4. The same may be stated about the port side 22, which is not shown. The starboard side 20 may comprise a hatch 28 which is watertight when closed, but when open provides an opening 30 in the starboard side 20, where the opening of the hatch 28 may decrease the height h2 gunwale 24 in the region of the hatch. The hatch 28 may be opened e.g. in a situation where a recovery operation has to be performed from the water surface 18 and onto the deck 12 of the marine vessel 2.

The marine vessel 2 may, furthermore, comprise a stabilisation element 32, which in this example is in the form of a positive buoyancy body (air filled flotation body) 34 and a fin 36, which is connected via a pivotal connection 38 to the outer surface 40 of the hull 4, allowing the stabilisation element 32 to pivot along a pivotal axis B in a starboard 20 direction and/or a port 22 direction. The stabilisation element 32 may be connected to a drive unit 42 e.g. via a transmission 44, where the drive unit 42 may be a motor, and optionally an electrical motor. The transmission 44 may be adapted to transfer a force from the drive unit 42 towards the stabilisation element 32, where the force may be used to manoeuvre the stabilisation element 32 from a first position to a second position, and/or may alternatively be used to maintain the current position of the stabilisation element 32. The drive unit 42 (control unit) may be connected to a processing unit 46, where the processing unit 46 provides control output which is configured to control the drive unit, and to provide instructions to the drive unit, in order to change or maintain the position of the stabilisation element 32. The processing unit may be a CPU or similar electrical equipment, where the processing unit 46 may be utilised to gather information and based on the information provide a control output to control the movement of the stabilisation element 32.

The marine vessel may comprise a sensor unit 48, such as a gyroscope and/or a accelerometer, which is connected to the processing unit 46, providing sensor input to the processing unit, where the sensor input relates to forces that affect the hull of the boat, such as rolling motion of the hull due to wind, wave or current conditions that affect the marine vessel 2. The sensor input may be transmitted to the processing unit, where the processing unit receives the sensor input in the form of e.g. electrical signals, where the processing unit 46 processes the sensor input based on rules or algorithms, and provides a control input to the drive unit 42, where the drive unit provides a control input to the stabilisation element, to control the movement of the stabilisation element 32.

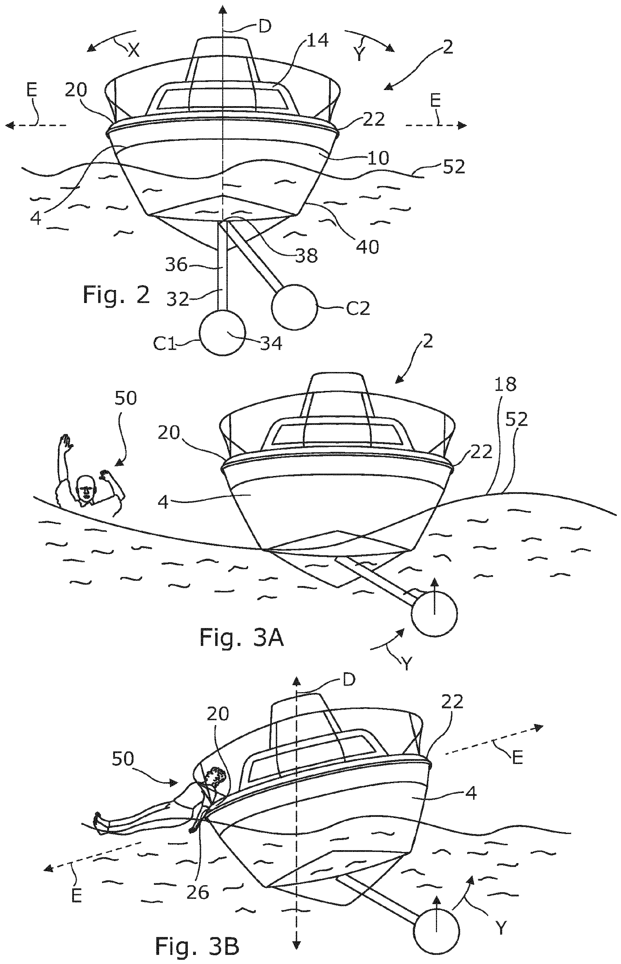

Fig. 2A is a front view of a marine vessel 2, shown in Fig. 1, having a starboard side 20 and a port side 22, where the outer surface of the hull 40 is provided with a stabilisation element 32, which is connected to the outer surface of the hull 40 via a pivotal connection 38. The stabilisation element 32 may be a positive buoyancy body 34 connected via a fin 36, where the stabilisation element 32 may be moved from a first position C1 to a second position C2, using the drive unit to provide mechanical force to move the stabilisation element 32. The movement of the stabilisation element 32 may be used to maintain the absolute roll position of the hull 4 in the water, so that when waves 52 hit the outer surface 10 of the hull 4 and to maintain the angle between a vertical axis D and a transverse axis E of the hull. Thus, the roll of the body in a starboard direction X or in a port direction Y may be minimised, by a movement 54 of the stabilisation element 32 to counteract the movement of the hull when hit by a wave 52.

Fig 3A and 3B show frontal views of a marine vessel 2, as seen in Fig. 1, where a person 50 has fallen overboard. The system for maintaining a predetermine roll angle (not shown) may be activated, where the stabilisation element is moved in a port direction Y, causing the marine vessel 2 to roll towards its starboard 22, so that the top of the hull 26 is moved closer to the surface of the water at the starboard side 22. This may assist a person aboard the marine vessel 2 to lift the person 50 out of the water, as the hull may be rolled towards the starboard side, thereby minimising the force required to pull the person 50 from the water surface 18 and onto the deck 12 of the marine vessel 2, as seen in Fig. 3B. When the marine vessel is rolled in the starboard direction, the sensors 48, the processing unit 46 and the drive unit may control the movement of the stabilisation element 32 so that the hull is maintained at its angle relative to the true vertical axis D, even though it is hit by waves 52 on the port side 22 and/or the starboard side 20.

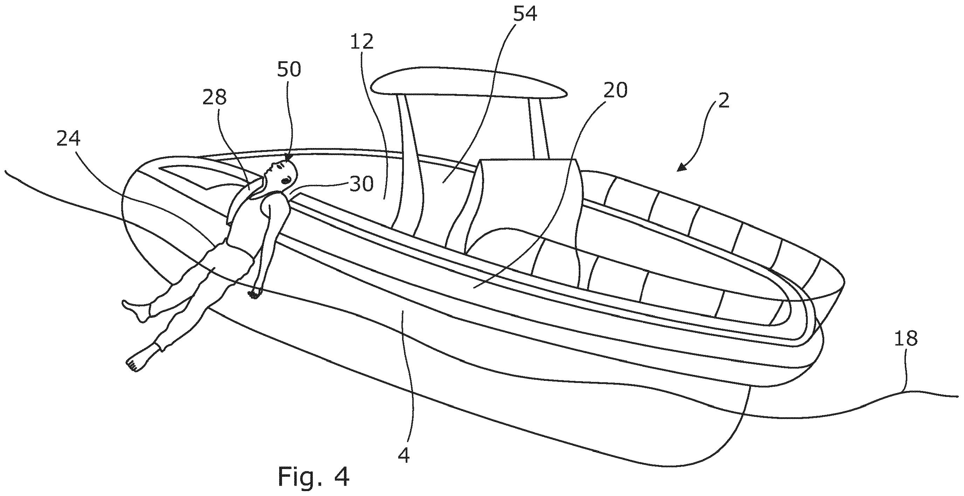

Fig. 4 is a perspective view of a marine vessel 2, which is floating in a body of water having a water surface 18, where a person 50 may be recovered via a hatch 28 opening 30, onto the deck 12 of the hull 4. The opening reduces the height of the gunwale 24 and shortens the distance to the inner surface 54 of the hull, which makes it easier to pull a person into the marine vessel 2. The marine vessel 2 may be provided with a system for maintaining a predetermined roll angle, as seen in Fig. 1 and disclosed in the present disclosure, where the system may be adapted to maintain a predetermined roll angle of the hull to e.g. a starboard side 20, as seen in Fig. 4, during a recovery operation.

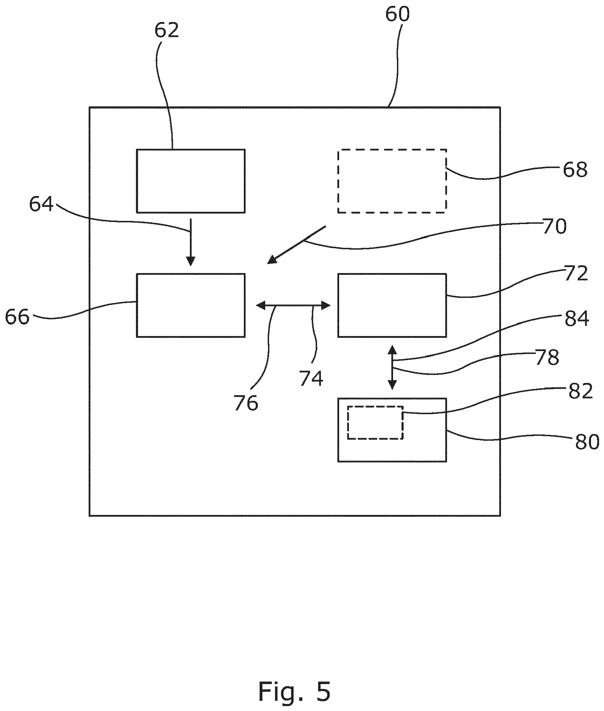

Fig. 5 shows a schematic view of a system 60 for maintaining a predetermined roll angle of a hull of a marine vessel. The system 60 comprises a sensor unit 62 which may provide a first sensor data 64 into a processing unit 66. The system may optionally comprise a positioning unit 68 providing positioning data 70 to the processing unit 66. The processing unit 66 may be connected to a control unit 72, where the processing unit 66 may transmit a first control output 74 to the control unit 72. The control unit 72 may further transmit a second control output 76 to the processing unit, where the second control output may comprise information on the position of the stabilisation element, or other information relating to the control unit and stabilisation element. The control unit 72 may transmit a control input 78 to the stabilisation element 80 and/or a transmission 82 which may be part of the stabilisation element and/or the control unit 72 to control the movement of the stabilisation element 80. The transmission 80 and/or the stabilisation element 78 may provide a second control input 84 to the control unit, where the second control output 84 may indicate a position and/or status of the stabilisation element 80.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 2: Marine vessel
- 4: Hull
- 6: Stern part
- 8: Bow part
- 10: Outer surface
- 12: Deck
- 14: Deckhouse
- 16: Waterline
- 18: Surface of water
- 20: Starboard side
- 22: Port side
- 24: Gunwale
- 26: Top of hull
- 28: Hatch
- 30: Opening in Hatch
- 32: Stabilisation element
- 34: Positive buoyancy body
- 36: Fin
- 38: Pivotal connection
- 40: Outer surface of hull
- 42: Drive unit
- 44: Transmission
- 46: Processing unit
- 48: Sensor unit
- 50: Person
- 52: Wave
- 54: Inner Surface of hull
- 60: System for maintaining a predetermined roll angle of a hull of a marine vessel
- 62: Sensor unit
- 64: First sensor data
- 66: Processing unit
- 68: Positioning unit
- 70: Positioning data
- 72: Control unit
- 74: First control output
- 76: Second control output
- 78: Control input
- 80: Stabilisation element
- 82: Transmission
- 84: Second control output
- A: Longitudinal axis
- B: Pivot axis
- C1: First position of stabilisation element
- C2: Second position of stabilisation element
- D: True vertical axis
- E: Transverse axis of marine vessel
- X: Starboard direction
- Y: Port side direction
- h1: Height gunwale
- h2: Height gunwale under hatch

## Claims

1. A system for maintaining a predetermined roll angle (heel) of a hull of a marine vessel, the system comprising:
a stabilisation element arranged below the waterline on an outer surface of the hull,
a sensor unit providing a first sensor data providing information relating to the movement and/or positioning of the marine vessel,
a processing unit receiving the first sensor data and providing a first control output,
a control unit receiving the first control output and providing a first control input to the stabilisation element to counteract a rolling movement and/or positioning of the marine vessel.

2. A system for stabilisation in accordance with claim 1, where the system is configured to stabilise the roll of the marine vessel.

3. A system for stabilisation in accordance with claim 1 or 2, wherein the hydrodynamic keel may be a counterweight keel and/or a positive buoyancy keel (floatation body keel).

4. A system for stabilisation in accordance with any of the preceding claims, wherein the system may be at least part of an overboard recovery system.

5. A system for stabilisation in accordance with any of the preceding claims, wherein the stabilisation element comprises a body that has a pivotal connection to the outside of the hull.

6. A system for stabilisation in accordance with any of the preceding claims, wherein the stabilisation element is configured to counteract a rolling movement of the hull of the marine vessel in relation to wave movement of the surrounding body of water that interacts with the hull.

7. A system for stabilisation in accordance with any of the preceding claims, wherein the control input controls an angular movement of the stabilisation element.

8. A system for stabilisation in accordance with any of the preceding claims, wherein the angular movement of the stabilisation element may be relative to a vertical axis and/or a longitudinal plane of the marine vessel.

9. A system for stabilisation in accordance with any of the preceding claims, wherein the system further comprises a positioning unit providing a first positioning output which provided as input to the processing unit.

10. A system for stabilisation in accordance with any of the preceding claims, wherein the system further comprises a human interface unit receiving a predetermined roll angle from a user and providing a second control input to the processing unit.

11. A system for stabilisation in accordance with any of the preceding claims, wherein the system is an active stabilisation system, and where the system reacts to the movement of the marine vessel.

12. A system for stabilisation in accordance with any of the preceding claims, wherein the predetermined roll angle is in a starboard and/or a port direction.

13. A system for stabilisation in accordance with any of the preceding claims, wherein the sensor unit may be one or more of the following: gyroscope, accelerometer, GPS, proximity sensor, magnetometer, barometer, roll sensor, pitch sensor, heave sensor, velocity sensor, or any kind of sensors that are capable of registering the motion of the hull of a marine vessel.

14. A system for stabilisation in accordance with any of the preceding claims, wherein the predetermined roll angle is greater than 0 degrees in a starboard and/or a port direction of the hull, preferably wherein the predetermined roll angle is greater than 1 degrees in a starboard and/or a port direction.

15. A method for maintaining a predetermined roll angle of a hull of a marine vessel, the method comprising the steps of:
providing a first sensor data providing information relating to the movement and/or positioning of the marine vessel,
receiving the first sensor data and providing a first control output,
receiving the first control output and providing a first control input to a stabilisation element that is arranged below the waterline on an outer surface of a hull to counteract a movement and/or a positioning of the marine vessel.
